# EUROPÄISCHE PATENTSCHRIFT

(11) **EP 2 201 650 B1**
(45) Veröffentlichungstag und Bekanntmachung des Hinweises auf die Patenterteilung: **22.01.2014**
(21) Anmeldenummer: 08802107.6
(22) Anmeldetag: 12.09.2008
(51) Int. Cl.: H01R 13/635, G06K 13/08

(54) **PUSH-PUSH-MECHANISMUS, INSBESONDERE FÜR EINEN KARTENLESER**
PUSH-PUSH MECHANISM, PARTICULARLY FOR A CARD READER
MÉCANISME DE DOUBLE POUSSÉE, NOTAMMENT POUR UN LECTEUR DE CARTES

(30) Priorität: 15.09.2007 DE 102007044170
(43) Veröffentlichungstag der Anmeldung: 30.06.2010
(73) Patentinhaber: Amphenol-Tuchel Electronics GmbH, 74080 Heilbronnn (DE)
(72) Erfinder: GÖBEL, Marco, 74613 Öhringen (DE)
(86) Internationale Anmeldenummer: PCT/EP2008/007554
(87) Internationale Veröffentlichungsnummer: WO 2009/033705

(56) Entgegenhaltungen:
- JP-A- 2000 260 524
- US-A1- 2006 166 532
- US-A1- 2007 207 650
- US-B1- 6 332 791
- US-B1- 6 955 548

## Beschreibung

Die Erfindung betrifft einen Push-Push-Mechanismus und damit die Ausbildung einer Steuerkurve für einen Push-Push-Mechanismus. Die Erfindung betrifft daher einen Push- . Push-Mechanismus, insbesondere eine Steuerkurve für einen Push-Push-Mechanismus, gemäß dem Oberbegriff des Patentanspruches 1. Die Erfindung betrifft insbesondere solche Push-Push-Steuerkurven, die geeignet sind zur Verwendung mit einem Kartenleser, der über einen Push-Push-Mechanismus verfügt. "Karte" bezieht sich dabei auf Chipkarten, Smartkarten und SIM-Karten, sowie andere typische Karten, die in der Technik eingesetzt werden. Kartenleser bezieht sich auf eine Kartenkontaktiereinrichtung, zur Verwendung mit einer Karte. Unter Push-Push-Mechanismus, beziehungsweise unter Push-Push-Steuerkurve, im Sinne der vorliegenden Erfindung ist eine Vorrichtung zu verstehen, die dazu geeignet ist, Karten in einen Kartenleser mittels einem ersten Push einzustecken und mittels einem zweiten Push auf die Karte, diese wieder aus dem Kartenleser zu entfernen. Allgemein bezieht sich die Erfindung auf einen Push-Mechanismus, bei dem ein durch die Steuerkurve geführter Steuerpin vorgesehen ist, dessen Befestigung in einem Schieber erfindungsgemäß formschlüssig erfolgt. Steckverbinder der eingangs genannten Art mit einem Push-Push-Mechanismus sind im Stand der Technik bereits bekannt. So zeigt die US 6,839,431 eine Kartenkontaktiereinrichtung mit einem Push-Push-Mechanismus und einer Herzsteuerkurve. Der dort gezeigte Mechanismus ist aus einer Vielzahl von Bauteilen zusammengesetzt. Ein Schieber, welcher von der Karte betätigt werden kann, arbeitet über ein Steuerglied mit einer in dem Kartenleser befindlichen Steuerkurve, sprich einer hier gezeigten Herzsteuerkurve, zusammen. Weiterhin ist eine Feder vorgesehen, die an dem Schieber an deren Betätigungsende angebracht ist. Der hier gezeigte Push-Push-Mechanismus hat einerseits den Nachteil, dass eine Vielzahl von Bauteilen benötigt werden, die insbesondere diviziel zusammenarbeiten und bei ungenauer Lage die Funktion des Kartenlesers beeinträchtigen. Weiterer Nachteil eines Push-Mechanismus, der hier gezeigten Art, ist die dadurch bedingte Bauhöhe des gesamten Kartenlesers. Die notwendige Steuerkurve, Herzkurve, verfügt über mehrere stufenartig angebrachte Steuerbereiche, über die der Steuerpin entlang gleitet, je nach Betätigungszustand. Die unterschiedlichen Stufen ermöglichen daher eine Zwangsführung des Steuerpins entlang der Kurve in eine Richtung folgend, sowie das Erreichen gezielter Zwischenzustände. Allerdings sind die Anzahl der Zustände und Zwischenzustände, somit der Lesezustand und der Öffnungszustand nur durch eine Vielzahl von Stufen innerhalb der Steuerkurve realisierbar. Weiter wird auf JP 2000 260524 A verweisen, welches die Merkmale des Oberbegriffs von Anspruch 1 zeigt. Der vorliegenden Erfindung liegt daher die Aufgabe zugrunde, einen gattungsgemäßen Push-Push-Mechanismus für eine Kartenkontaktiervorrichtung, so zu verbessern, dass dadurch die gesamte Bauhöhe der Kartenkontaktiervorrichtung deutlich minimiert werden kann, bei gleichzeitig großer Betriebssicherheit. Weiteres Ziel der hier vorliegenden Erfindung ist es, die Anzahl der Bauteile eines erfindungsgemäßen Push-Push-Mechanismus zu verringern. Diese Aufgabe wird gelöst durch die Merkmale des Anspruches 1. In den Unteransprüchen sind bevorzugte Ausführungsformen der Erfindung gekennzeichnet.

Erfindungsgemäß wird ein Push-Push-Mechanismus mit einer Steuerkurve so vorgesehen, dass die Steuerkurve über einen federnden Steuerpin verfügt, der entlang einer Wand zwangsgeführt und gespannt wird und dadurch die Anzahl von Stufen in der Steuerkurve verringert werden kann.

Erfindungsgemäß wird die Steuerkurve als zweistufige Steuerkurve ausgeführt, sodass der Steuerpin vorgespannt wird und nur einem vordefinierten Pfad folgen kann und somit zwangsgeführt ist. Durch die Anzahl der Stufen nimmt aber konstruktionsbedingt, die Bauhöhe zu. In der Lesestellung befindet sich der Steuerpin in einer Ruheposition, die durch einen V-förmigen Wandtrichter gebildet wird. Da der Steuerpin im ausgelenkten Zustand, bedingt durch seine Federspannung, bestrebt ist, entgegen seiner Auslenkung, zurückzufedern, ist es möglich, die Stufen im Bereich der Ruhestellung einzusparen. Die Rückkehr des Steuerpins in die Ausgangsposition muss insofern nicht über eine Zwangsstufe erfolgen. Um daher die Bauhöhe der Steuerkurve und des Steuerpins zu verringern, kann die Steuerpinlänge auf die einzig vorhandene Stufenhöhe abgestimmt werden, sodass die Gesamthöhe einerseits reduziert wird durch die Reduzierung der Steuerpinlänge bei gleichzeitiger Reduktion der Stufenanzahl.

Erfindungsgemäß wird der Steuerpin formschlüssig mit dem Schieber verbunden, der bei Verwendung in einem Push-Push-Kartenleser mittels Einsetzen einer Karte betätigbar ist. Erfindungsgemäß hat auf Grund seiner Befestigung der Steuerpin einen Anschlag nach oben, sodass er bedingt durch seine Vorspannung immer bestrebt ist in seiner Ausgangstellung entgegen dieser Vorspannung zurückzukehren. Erfindungsgemäß ist der Schieber einstückig mit dem Steuerpin ausgebildet und vorzugsweise als Metallstanzbiegeteil hergestellt. Der Steuerpin erhält dabei bereits seine Vorspannung. Der Schieber weißt erfindungsgemäß einen Kartenanschlag auf, über den der Schieber und damit der Steuerpin betätigbar ist. Erfindungsgemäß wird durch Betätigung mittels einer Karte nach Einsetzen der Karte in die Kartenkontaktiereinrichtung der Schieber über den Kartenanschlag betätigt. Durch Betätigen des Schiebers wird der Steuerpin, welcher formschlüssig mit dem Schieber verbunden ist, entlang einer Wand zwangsgeführt und in eine erste Rast- und Leseposition befördert. Erfindungsgemäß wird die Rast- und Leseposition dadurch erreicht, dass der Steuerpin am Ende des Betätigungsweges mittels der Karte, die den Schieber und daher den Steuerpin in eine solche Position bewegt, in der der Steuerpin in die besagte Rast- und Leseposition entgegen seiner Vorspannung einfedern kann. In dieser Position, sprich Leseposition der Karte bezüglich der Kartenkontaktiereinrichtung, ist eine stabile Rastposition erreicht. Um die Karte wieder aus der Kartenaufnahme der Kartenkontaktiervorrichtung und damit der Leseposition zu entnehmen, wird mittels einem weiteren Push die Karte und damit über den Kartenanschlag der Schieber entgegen einer Feder, welche mit dem Schieber verbunden ist, betätigt. Dadurch wird der Schieber ein Stück weiter in den Kartenaufnahmeraum hinein geschoben und der daran befestigte Steuerpin kann seine Rastposition dadurch verlassen, dass er bestrebt ist, entgegen seiner Spannung weiter auszuschwenken, um an einer zweiten Führungswand anzuliegen. Lässt nun der Betätiger die Karte nach dem zweiten Push los, kann in Folge der Federkraft die auf den Schieber wirkt, der gesamte Schieber mitsamt Karte aus dem Kartenaufnahmeschaft zurückbefördert werden und der Steuerpin gleitet dabei entlang der zweiten Führungswand zurück in seine Ausgangsposition. Dabei legt der Steuerpin eine Höhendifferenz zurück und überwindet am Ende des Betätigungsvorgangs eine Stufe, um in seine Ausgangsposition zurück zu gelangen. Vorzugsweise wird beim ersten Push, und damit beim Hineinschieben der Karte, der Steuerpin entlang einer Führungswand so aus seiner Ruhelage bewegt, dass die Vorspannung mit zunehmendem Zurücklegen des Betätigungsweges weiter anwächst und am Ende des Betätigungsweges somit eine maximale Vorspannung aufgebaut ist. Bei weiterem Drücken des Schiebes, somit am Ende des ersten Push, in Folge der Betätigung der Karte rutscht der Steuerpin in besagte Rastposition, in der die Karte in ihrer Leseposition gehalten wird und der Schieber somit gegen eine Spiralfeder gespannt ist.

Weitere Vorteile, Ziele und Einzelheiten der Erfindung ergeben sich aus der Beschreibung von Ausführungsbeispielen anhand der Zeichnungen; in der Zeichnung zeigt:
Fig. 1 eine schematische Draufsicht, schräg von oben auf einen Push-Push-Mechanismus;
Fig. 2 eine Detailansicht gemäß Fig. 1 umfassend die Steuerkurve;
Fig. 3 eine schematische Draufsicht auf einen Push-Push-Mechanismus, gemäß Fig. 1 in der Ausgangsposition;
Fig. 4 eine schematische Draufsicht, schräg von oben, auf einen Push-Push-Mechanismus, gemäß Fig. 1, jedoch mit betätigtem Schieber in eine Position kurz vor der Leseposition;
Fig. 5 eine schematische Draufsicht eines Push-Push-Mechanismus, gemäß Fig. 4;
Fig. 6 eine schematische Draufsicht, schräg von oben, auf einen Push-Push-Mechanismus, nach einem weiteren Push, wobei insbesondere der Steuerpin in einer nicht ausgelenkten Position zurückgefedert ist;
Fig. 7 eine Draufsicht gemäß Fig. 6.

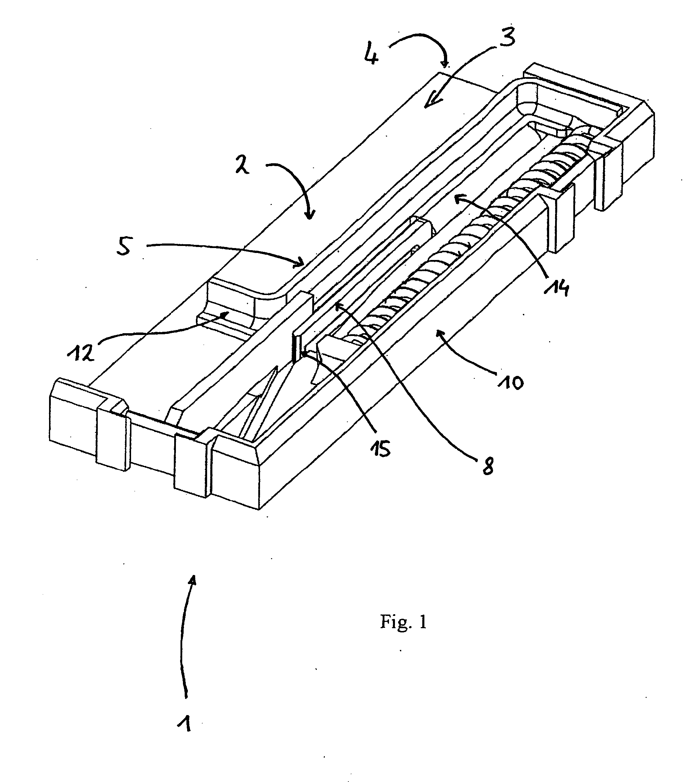

In den Fig. 1 bis 8 ist jeweils ein Ausschnitt eines Kartenlesers gezeigt, welcher vorzugsweise ein Chipkartenleser, ein Smart-Card-Connector oder ein SIM-Kartenleser, allgemein ein Leser darstellt und den erfindungsgemäßen Teil des Push-Push-Mechanismusses eines solchen Kartenlesers in verschiedenen Positionen zeigt. In Fig. 1 ist ein solches Detail, nämlich ein Push-Push-Mechanismus 1, eines erfindungsgemäßen Kartenlesers gezeigt. Nicht dargestellt ist, der an dem Detail angeschlossenen linken Bereich der Kartenaufnahmeraum und der typischerweise für einen solchen Kartenleser vorgesehene Deckel, welcher zusammen mit dem Boden 2 des Kartenlesers einen Kartenaufnahmeraum bildet. Zwischen dem Boden 2 und dem nicht dargestellten Deckel befindet sich ein Kartenaufnahmeraum 3. In Fig. 1 ist dieser Kartenaufnahmeraum nur ansatzweise in der Teilansicht dargestellt. Gezeigt ist auch ein Teil des Bodens 2 des Kartenlesers auf dem eine einzusetzende Karte aufliegt. Am steckseitigen Ende 4 eines erfindungsgemäßen Kartenlesers wird eine Karte in den Einschubschlitz eingeführt, solange, bis sie mit dem steckseitigen Ende der Karte an den Anschlag 6 des Schiebers 5 trifft. Der in Fig. 1 perspektivisch dargestellte Push-Push-Mechanismus 1 besteht im Wesentlichen aus dem Schieber 5, mit einem Kartenanschlag 6, sowie einer Feder 7, die den Schieber 5 in der Fig. 1 gezeigten Stellung vorspannt und weiterhin umfassend einen Steuerpin 8, welcher einstückig am Schieber 5 befestigt ist.

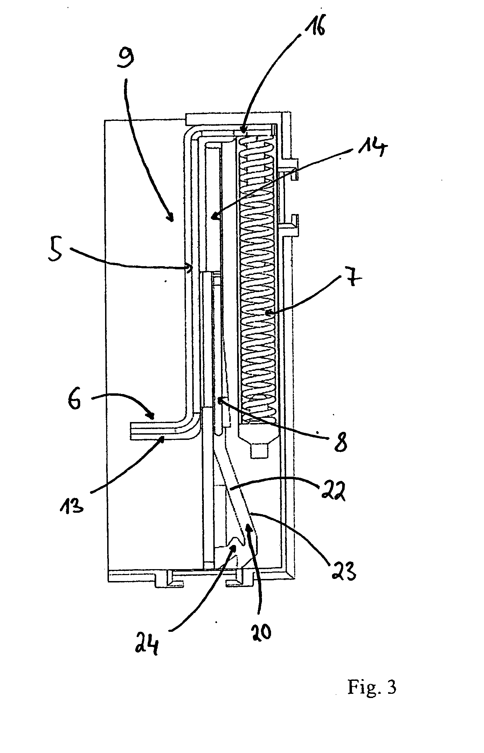

Im Folgenden werden erst einmal der Schieber 5 und der Steuerpin 8 beschrieben. Der Schieber 5 befindet sich in Fig. 3 in einer Ausgangsposition A und weißt einen Längsarm 9 auf, an dem an beiden Enden ein jeweils auskragender Querarm 6, 16 befestigt ist. Der erste Querarm 6, welcher sich im Kartenaufnahmeraum 3 befindet und in diesen hineinragt, wirkt als Kartenanschiag 6. Wird eine Karte in den Kartenaufnahmeraum 3 eingeführt, so erreicht sie nach Einstecken mit dem steckseitigen Ende den Kartenanschlag 6, über den der Schieber 5 betätigt werden kann. Der zweite Querarm 16, welcher am steckseitigen Ende des Schiebers 5 befestigt ist, kragt in die gegenüberliegende Richtung in Richtung der seitlichen Außenwand 10 hin. Mit seiner vorderen Fläche liegt der Querarm 16 gegen die steckseitige Außenwand 11 an, bedingt durch die Vorspannung der Feder 7, die den Schieber 5 in dieser Position hält. Wie in Fig. 3 deutlich zu erkennen ist, befindet sich der federnde Steuerpin 8 in seiner entlasteten Ausgangslage und verläuft parallel zum Längsarm 9 des Schiebers 5. Der Schieber 5 mit dem einstückig ausgebildeten Steuerpin 8 ist hier als Stanzbiegeteil ausgebildet. Der Schieber 5 hat in seinem Querschnitt ungefähr eine L-Form und wird entlang eines Radius 12 zu vorbesagter L-Form gebogen, so dass der Schieber 5 über ein Basisteil 13 verfügt, mit dem er auf dem Boden 2 des Kartenlesers gleiten kann. Das Basisteil 13 verläuft von dem einen Querarm 6 über den Längsarm 9 zum zweiten Querarm 16 entlang des gesamten Schiebers 5 und wird dazwischen über ein Verbindungsteil 14 mit dem Steuerpin 8 verbunden. Das Verbindungsteil 14 ist eine partielle Verlängerung des Basisteils 13. An dem stirnseitigem Ende des Verbindungsteils 14 ist der Steuerpin 8 federnd ausgebildet. Wie in Fig. 1 ersichtlich, ist der Steuerpin 8 an seinem freien Ende mit einem Führungsstift 15 ausgestattet, welcher von dem längsgestreckten Steuerpin 8 nach unten weg kragt und mit dessen Ende auf der Steuerkurve 20 aufsitzt. Bei der in Fig. 1 bis Fig. 3 dargestellten Ausgangsposition A des Schiebers 5 befindet sich der daran befestigte Steuerpin 8 in seiner Ruheposition und ist daher entlastet. Der Steuerpin 15 ist so ausgebildet, dass er entlang der Steuerkurve 20 bei Betätigen des Schiebers 5 mit der Karte entlang geführt wird. Der Steuerpin 8 verfügt somit über ein freies Ende 17 und ein festes Ende 18, welches am Verbindungsteil 14 federnd angelenkt ist. Die Gesamthöhe des Lesers ergibt sich somit aus der Höhe der Steuerkurve und der Gesamthöhe des Steuerpins, insbesondere der Länge des Führungsstiftes 15.

### Die Steuerkurve 20

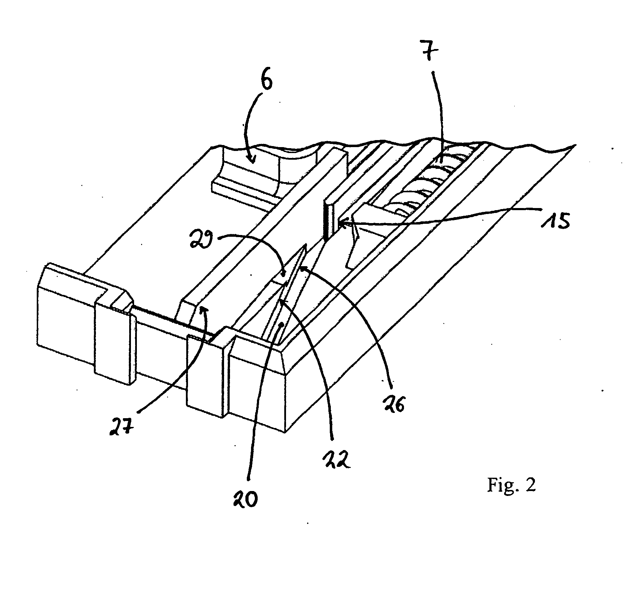

Die Gesamthöhe des Lesers wird definiert durch die geometrische Abmessung des Führungsstiftes mit dem Steuerpin, sowie die Höhe beziehungsweise die Gesamthöhe der Steuerkurve über die der Steuerpin 8 mit dem Ende seines Führungsstiftes 15 gleitet. Da die Steuerkurve 20 mit ihrer Oberfläche 21 bezüglich der Kartengleitebene, die als Parallelebene zum Boden 2 des Kartenlesers ausgebildet ist, eine Steigung zurücklegt, definiert die Gesamthöhe somit der höchste Punkt der Streuerkurve 20 bezogen auf den Boden des Kartenlesers, addiert um die Gesamthöhe des Steuerpins 8 mit dem Führungsstift 15, der an der höchsten Stelle mit seinem Ende auf der Steuerkurve 20 aufliegt. Erfindungsgemäß wurde wie in Fig. 2 gezeigt, lediglich eine Stufe 22 in die Steuerkurve 20 gelegt. Die Steuerkurve 20 ist eine in sich geschlossene von Führungswänden begrenzte Führungsnut. Aufgabe der Steuerkurve ist es, bei Betätigen des Schiebers 5 den Steuerpin 8 mit seinem Führungsstift 15 zwangszuführen und zwar entlang einer vorgegebenen Laufrichtung im Uhrzeigersinn, gemäß der Abfolge von Fig. 1, 4 bis 6. Die Steuerkurve ist jeweils entlang ihrer Längserstreckung an beiden Seiten durch Führungswände 22, 23 eingefasst. Die Führungswand 22 dient dabei als Gleitfläche für den Führungsstift 15, an dem bei Betätigen des Schiebers 5 der Steuerpin mit seinem Führungsstift 15 entlang gleiten kann. Die Steuerkurve verläuft weiter zu einer Ausnehmung 24, die V-förmig in die Führungswand 22 eingeprägt ist. Diese Ausnehmung 24 dient der haltenden Anlage des Führungsstiftes 15 des Steuerpins 8. Die Steuerkurve verfügt im weiteren Verlauf über einen Steuerkurvenabschnitt 25, der von einem ersten Punkt 25a bis zu einem zweiten Punkt 25b der Steuerkurve schräg nach oben verläuft, somit ansteigend ausgebildet ist. Am Ende dieses Steuerkurvenabschnittes 25 endet die Steuerkurve mit einer Stufe 26, welche zurück zum Anfangspunkt der Steuerkurve 20 führt. Der Steuerkurvenabschnitt 25 ist auf seiner linken Seite von der Kammerwand 27 und auf der rechten Seite von der umlaufenden schon zuvor erwähnten Führungswand 22 eingegrenzt. Die Gesamthöhe des Lesers und damit die Höhe der Kammerwand 27 wird bestimmt durch die Höhe der Steuerkurve 20 bezüglich der Unterseite des Bodens 2, addiert um die Höhe der Stufe 26, addiert um die Höhe des Steuerpins 8 mit seinem Führungsstift 15.

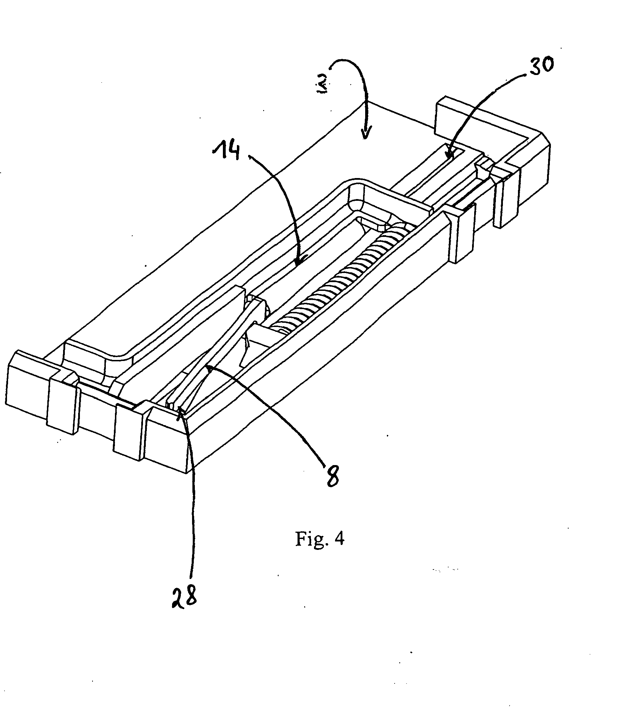

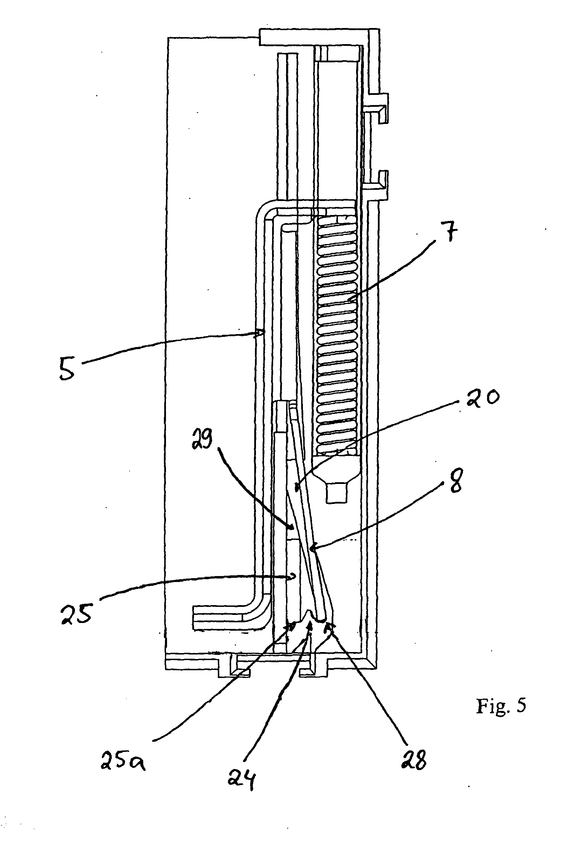

Betätigt man somit den Schieber 5 mittels einer in den Öffnungsschlitz des Kartenlesers eingeführten Karte aus der Ausgangsposition A, wie in Fig. 1 und Fig. 3 gezeigt, in die Position, wie sie in Fig. 4 gezeigt ist, so wird der Steuerpin 8 entlang der Führungswand 22 entlang der Steuerkurve 20 geführt, bis zu einer maximal ausgelenkten Lage bei der Position 28. Wie in Fig. 5 zu sehen, ist in dieser Stellung der Schieber 5 in den Kartenaufnahmeraum eingeschoben und der Steuerpin 8 gegenüber seiner Ausgangsposition federnd und vorgespannt ausgelenkt. Bei der weiteren Betätigung des Schiebers 5 in der eben erwähnten Richtung gleitet der Führungsstift 15 um die Spitze 29 der Führungswand 22 herum und taucht in die Ausnehmung 24 ein. Lässt man nun den Betätigungsdruck auf die Karte los, so versucht die Feder 7 den Schieber 8 entgegen der Betätigungsrichtung in seiner Ausgangsposition zurückzubewegen, was allerdings dadurch verhindert wird, dass der Führungsstift 15 des Steuerpins 8 in die Ausnehmung 24 haltend eingreift und ein Zurückgleiten des Schiebers 5 dadurch verhindert wird. Durch diese Bewegung wurde der erste Push dazu verwendet, die Karte in eine stabile Leseposition zu bewegen, bei der der Steuerpin 8 in seiner Rastposition in der Ausnehmung 24 gehalten ist. Erfindungsgemäß ist wie in Fig. 5 gezeigt, der Steuerpin 8 federnd ausgelenkt, so dass er bei der gerade beschriebenen weiteren Betätigung des Schiebers zwangsweise versucht, in seine Ausgangsposition zurückzukehren, sich somit in Richtung auf die Kammerwand 27 zu bewegt. Dadurch gleitet er automatisch in die stabile Rastposition, somit in die Ausnehmung 24.

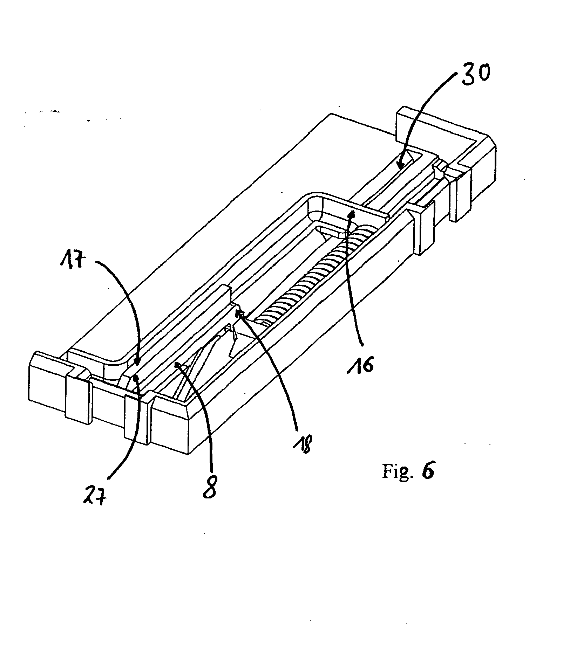

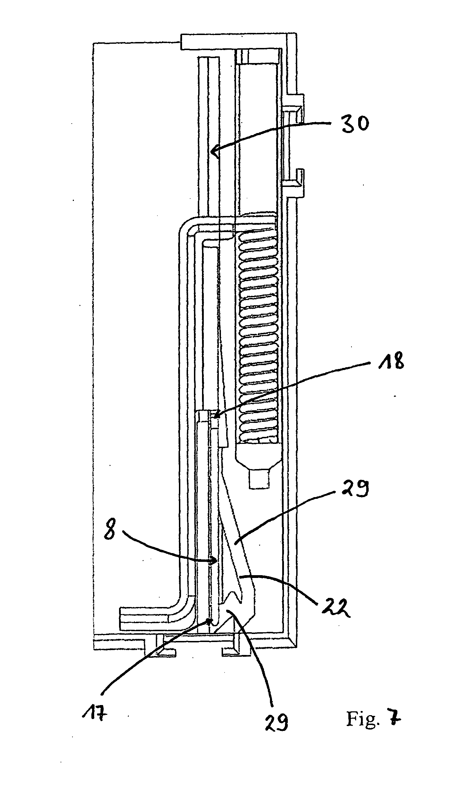

Bei einer weiteren Betätigung, sprich bei einem weiteren Push auf die Karte zur Entnahme dieser aus der stabilen Leseposition, versucht der Steuerpin 8, welcher immer noch gegenüber seiner Ruhelage federnd vorgespannt ausgelenkt ist, aus der Ausnehmung 24 weiter in Richtung auf die Kammerwand 27 zurückzufedern, sowie in Fig. 6 und Fig. 7 dargestellt. In dieser Lage ist der Steuerpin 8 parallel zum Schieber 5 und zur Kammerwand 27 ausgerichtet und kann bei Loslassen des Drucks auf die Karte nun entlang des Steuerkurvenabschnittes 25 hochgleiten. Da der Steuerpin 8 sich nun frei entlang der Steuerkurve bewegen kann, bewirkt die Feder 7, dass der Schieber 5 in seine Ausgangsstellung zurückbewegt wird. Kurz vor Erreichen der Ausgangsstellung A erreicht der Steuerpin 8 mit seinem Führungsstift 15 die Stufe 26. In dieser Lage wird die maximale Höhe der Steuerkurve und damit die minimale Bauhöhe des Kartenlesers definiert. Da die Steuerkurve 20 mit nur einer einzigen Stufe 26 ausgebildet ist, wird die Gesamthöhe des Lesers auch nur von der Höhe des Steuerpins und dieser Stufe mitbestimmt. Die Steuerkurve verfügt daher über einen ebenen Abschnitt, beginnend vom Ausgangspunkt A bis zum Steuerkurvenabschnitt 25, der schräg ansteigt, bis hin zur Stufe 26, und kurz vor Erreichen der Stufe 26 noch einen ebenen, im Wesentlichen dreieckig ausgebildeten Steuerkurvenabschnitt 29. Wie in Fig. 4 zu erkennen, gleitet der Schieber 5 in einer Führungsnut 30 mit einem nicht dargestellten Führungspin. In der hier dargestellten Ausführungsform wird der Schieber 5 gegen die Kammerwand 27 gedrückt und gleitet an dieser entlang, ohne über konkrete Führungsmittel verfügen zu müssen, da bedingt durch die Federkraft des Steuerpins 8 auch der Schieber 5 gegen die Kammerwand 27 dauerhaft gedrückt wird, sobald der Schieber aus seiner Ausgangsposition A ausgelenkt und betätigt wird. Mit dem Steuerpin 8 wird dadurch auch die Zwangsführen des Schiebers 5 parallel zur Betätigungsrichtung erreicht, ohne dass es weiterer Bauelemente bedarf. Der Querarm 16 bildet neben einer Anlagefläche für die Feder 7 auch ein Führungspin für die Führungsnut 30 aus. Die zuvor beschriebene Push-Push-Bewegung und damit die Führung des Steuerpins entlang der Steuerkurve kann beliebig oft wiederholt werden und bedingt durch einen ersten Push sozusagen, das Erreichen einer stabilen Leseposition und durch einen zweiten Push die Entnahme der Karte aus der Leseposition in die Entnahmeposition, die der Ausgangsposition A entspricht, erreicht werden.

### Bezugszeichenliste

Push-Push-Mechanismus, insbesondere für einen Kartenleser
- 1: Push-Push-Mechanismus
- 2: Boden
- 3: Kartenaufnahmeraum
- 4: Karteneinschubseite
- 5: Schieber
- 6: Kartenanschlag/Querarm
- 7: Feder
- 8: Steuerpin
- 9: Längsarm
- 10: seitliche Außenwand
- 11: steckseitige Außenwand
- 12: Radius
- 13: Basisteil
- 14: Verbindungsteil
- 15: Führungsstift
- 16: Querarm
- 17: freies Ende des Steuerpins
- 18: festes Ende des Steuerpins
- 20: Steuerkurve
- 21: Oberfläche
- 22, 23: Führungswände
- 24: Ausnehmung
- 25: Steuerkurvenabschnitt
- 25a: Beginn des ansteigenden Steuerkurvenabschnittes
- 25b: Ende des ansteigenden Steuerkurvenabschnittes
- 26: Stufe
- 27: Kammerwand
- 28: Auslenkposition
- 29: ebener Steuerkurvenabschnitt
- 30: Führungsnut

## Patentansprüche

1. Push-Push-Mechanismus (1), insbesondere für einen Kartenleser mit einer Steuerkurve (20) und einem Steuerpin (8), der mit der Steuerkurve (20) in Eingriff steht und mit einem Schieber (5) wirkverbunden ist, wobei der Übergang des Steuerpins (8) von der Ausgangsposition in die Leseposition durch einen ersten Push und der Übergang von der Leseposition zurück in die Ausgangsposition durch einen zweiten Push auf den Steuerpin (8) und damit auf den Schieber (5) erfolgt, wobei der Steuerpin (8) während seiner Betätigung entlang der Steuerkurve (20) federnd ausgelenkt wird, wobei ferner eine Kammerwand (27) vorgesehen ist, **dadurch gekennzeichnet, dass** die Steuerkurve (20) durch die Kammerwand (27) seitlich begrenzt wird, die gleichzeitig als Führungswand für den Steuerpin (8) und den Schieber (5) dient, der an dieser entlang gleiten kann.

2. Push-Push-Mechanismus (1) gemäß Anspruch 1, **dadurch gekennzeichnet, dass** der Steuerpin (8) vom Übergang aus der Ausgangsposition bis zur Leseposition vom Schieber (5) weg federnd ausgelenkt wird.

3. Push-Push-Mechanismus (1) gemäß Anspruch 1 oder 2, **dadurch gekennzeichnet, dass** die Steuerkurve (20) von Führungswänden (22, 23) eingegrenzt ist.

4. Push-Push-Mechanismus (1) gemäß einem der vorhergehenden Ansprüche, **dadurch gekennzeichnet, dass** die Führungswand (22) über eine Ausnehmung (24) verfügt, in die der Steuerpin (8) in der Leseposition verrasten kann.

5. Push-Push-Mechanismus (1) gemäß einem der vorhergehenden Ansprüche, **dadurch gekennzeichnet, dass** die Steuerkurve (20) von der Führungswand (22) so begrenzt ist, dass der Steuerpin (8) entlang der Führungswand (22) geführt wird und dabei federnd ausgelenkt wird.

6. Push-Push-Mechanismus (1) gemäß einem der vorhergehenden Ansprüche, **dadurch gekennzeichnet, dass** die erste Führungswand (22) als Führungswand für den ersten Push für den Steuerpin (8) dient und die Kammerwand (27) als Führungswand für den zweiten Push für den Steuerpin (8) dient.

7. Push-Push-Mechanismus (1) gemäß einem der vorhergehenden Ansprüche, **dadurch gekennzeichnet, dass** beim Einschieben, somit beim ersten Push, des Schiebers (5) in den Kartenleser der Steuerpin (8) beim Erreichen der Auslenkposition (28) entgegen seiner Auslenkrichtung maximal federbelastet.

8. Push-Push-Mechanismus (1) gemäß einem der vorhergehenden Ansprüche, **dadurch gekennzeichnet, dass** kurz nach Überschreiten der Auslenkposition (28) beim ersten Push durch weiteres Einschieben des Schiebers (5) in Einschubrichtung der Steuerpin (8) entgegen seiner Ausfederrichtung in Richtung seiner nicht ausgefederten Lage zurückfedert.

9. Push-Push-Mechanismus (1) gemäß einem der vorhergehenden Ansprüche, **dadurch gekennzeichnet, dass** eine Feder (7), welche wirkverbunden ist mit dem Schieber (5) beim ersten Push entgegen der Einschubrichtung federbelastet gespannt wird und versucht den Schieber in seine Ausgangslage zurückzubewegen.

10. Push-Push-Mechanismus (1) gemäß einem der vorhergehenden Ansprüche, **dadurch gekennzeichnet, dass** bei unvollständigem Ausführen des ersten Push, das heißt vor erreichen der Leseposition und vor erreichen der Auslenkposition (28), der Schieber (5) in seine Ausgangsstellung zurückkehrt, wobei der Steuerpin entlang der Führungswand (22) gleitet und entgegen seiner Auslenkung in seine nicht ausgelenkte Position zurückfedert.

11. Push-Push-Mechanismus (1) gemäß einem der vorhergehenden Ansprüche, **dadurch gekennzeichnet, dass** nach Erreichen der Auslenkposition (28) bis zum Ende des ersten Push der Steuerpin (8) in die Ausnehmung (24) einfedert und dann beim Loslassen des Schiebers (5) in dieser Rastposition an der Ausnehmung (24) gehalten wird.

12. Push-Push-Mechanismus (1) gemäß einem der vorhergehenden Ansprüche, **dadurch gekennzeichnet, dass** der Steuerpin (8) über einen Führungsstift (15) verfügt, welcher in die Ausnehmung (24) eintaucht beim Erreichen der Leseposition und der Schieber dadurch entgegen der Federkraft der Feder (7) gehalten wird.

13. Push-Push-Mechanismus (1) gemäß einem der vorhergehenden Ansprüche, da durch gekennzeichnet, dass der Übergang des Steuerpins (8) von der Ausnehmung (24) zurück in die Ausgangsposition durch einen zweiten Push auf den Schieber bewerkstelligt wird, wobei der Steuerpin (8) entgegen seiner federnden Auslenkung weiter zurück in die nicht ausgelenkte Position federt, bis der Steuerpin (8) die Kammerwand (27) erreicht hat und an dieser anliegt.

14. Push-Push-Mechanismus (1) gemäß einem der vorhergehenden Ansprüche, **dadurch gekennzeichnet, dass** der Steuerpin (8) nach dem zweiten Push kurz nach Verlassen der Ausnehmung (24) auf einen schräg nach oben ansteigenden Steuerkurvenabschnitt (25) auftrifft und auf dieser entlang gleitet, dadurch dass die Feder (7) den Schieber (5) versucht in die Ausgangsposition zurückzubewegen.

15. Push-Push-Mechanismus (1) gemäß einem der vorhergehenden Ansprüche, **dadurch gekennzeichnet, dass** sich am Ende des Steuerkurvenabschnittes (25) der Steuerpin (8) auf einem ebenen, im Wesentlichen dreieckeigen Steuerkurvenabschnitt (29) befindet.

16. Push-Push-Mechanismus (1) gemäß einem der vorhergehenden Ansprüche, **dadurch gekennzeichnet, dass** sich am Ende des Steuerkurvenabschnittes (25) eine Stufe (26) befindet.

17. Push-Push-Mechanismus (1) gemäß einem der vorhergehenden Ansprüche, **dadurch gekennzeichnet, dass** der Steuerpin (8) und der Schieber (5) einstückig ausgebildet sind.

18. Push-Push-Mechanismus (1) gemäß einem der vorhergehenden Ansprüche, **dadurch gekennzeichnet, dass** die Stufe (26) die Richtung des Steuerpins (8) in Uhrzeigerrichtung vorgibt, indem der Steuerpin (8) beim Auftreffen auf die Stufe (26) zur Führungswand (22) hinbewegt wird.

## Claims

1. Push-push mechanism (1), particularly for a card reader, with a radial cam (20) and a control pin (8), which is in engagement with the radial cam (20) and is operatively connected to a slider (5), wherein the transition of the control pin (8) from the starting position into the reading position is undertaken by a first push on the control pin (8), and therefore on the slider (5), and the transition from the reading position back into the starting position is undertaken by a second push on said control pin (8), and therefore on said slider (5), wherein the control pin (8), during the actuation thereof, is resiliently deflected along the radial cam (20), and wherein, furthermore, a chamber wall (27) is provided, **characterized in that** the radial cam (20) is laterally bounded by the chamber wall (27) which serves at the same time as a guide wall for the control pin (8) and the slider (5), which can slide along said guide wall.

2. Push-push mechanism (1) according to Claim 1, **characterized in that** the control pin (8) is resiliently deflected away from the slider (5) by the transition from the starting position as far as the reading position.

3. Push-push mechanism (1) according to Claim 1 or 2, **characterized in that** the radial cam (20) is delimited by guide walls (22, 23).

4. Push-push mechanism (1) according to one of the preceding claims, **characterized in that** the guide wall (22) has a recess (24) into which the control pin (8) can latch in the reading position.

5. Push-push mechanism (1) according to one of the preceding claims, **characterized in that** the radial cam (20) is delimited by the guide wall (22) in such a manner that the control pin (8) is guided along the guide wall (22) and, in the process, is resiliently deflected.

6. Push-push mechanism (1) according to one of the preceding claims, **characterized in that** the first guide wall (22) serves as a guide wall for the first push for the control pin (8), and the chamber wall (27) serves as a guide wall for the second push for the control pin (8).

7. Push-push mechanism (1) according to one of the preceding claims, **characterized in that**, during the insertion, therefore during the first push, of the slider (5) into the card reader, the control pin (8) is maximally spring-loaded on reaching the deflection position (28) counter to the deflection direction thereof.

8. Push-push mechanism (1) according to one of the preceding claims, **characterized in that**, shortly after the deflection position (28) is exceeded during the first push by further insertion of the slider (5) in the insertion direction, the control pin (8) springs back in the direction of the non-rebounded position thereof, counter to the rebound direction thereof.

9. Push-push mechanism (1) according to one of the preceding claims, **characterized in that** a spring (7) which is operatively connected to the slider (5) during the first push is tensioned in a spring-loaded manner counter to the insertion direction and attempts to move the slider back into the starting position thereof.

10. Push-push mechanism (1) according to one of the preceding claims, **characterized in that**, when the first push has not been completely carried out, that is to say before the reading position is reached and before the deflection position (28) is reached, the slider (5) returns into the starting position thereof, the control pin sliding along the guide wall (22) and springing back into the non-deflected position thereof counter to the deflection thereof.

11. Push-push mechanism (1) according to one of the preceding claims, **characterized in that**, after the deflection position (28) is reached, up to the end of the first push, the control pin (8) springs into the recess (24) and then, when the slider (5) is released, is held in this latching position at the recess (24).

12. Push-push mechanism (1) according to one of the preceding claims, **characterized in that** the control pin (8) has a guide pin (15) which enters the recess (24) when the reading position is reached, and the slider is thereby held counter to the spring force of the spring (7).

13. Push-push mechanism (1) according to one of the preceding claims, **characterized in that** the transition of the control pin (8) from the recess (24) back into the starting position is brought about by a second push on the slider, wherein the control pin (8) springs back further counter to the resilient deflection thereof into the non-deflected position until the control pin (8) has reached the chamber wall (27) and bears thereagainst.

14. Push-push mechanism (1) according to one of the preceding claims, **characterized in that**, after the second push, the control pin (8), shortly after leaving the recess (24), strikes against a radial cam section (25) rising obliquely upwards and slides therealong by the spring (7) attempting to move the slider (5) back into the starting position.

15. Push-push mechanism (1) according to one of the preceding claims, **characterized in that**, at the end of the radial cam section (25), the control pin (8) is located on a planar, substantially triangular radial cam section (29).

16. Push-push mechanism (1) according to one of the preceding claims, **characterized in that** a step (26) is located at the end of the radial cam section (25).

17. Push-push mechanism (1) according to one of the preceding claims, **characterized in that** the control pin (8) and the slider (5) are formed as a single piece.

18. Push-push mechanism (1) according to one of the preceding claims, **characterized in that** the step (26) predetermines the direction of the control pin (8) in the clockwise direction by the control pin (8) moving towards the guide wall (22) on striking against the step (26).

## Revendications

1. Mécanisme de double poussée (1), en particulier pour un lecteur de cartes comprenant une came de commande (20) et une tige de commande (8) qui est en prise avec la came de commande (20) et est en liaison fonctionnelle avec un coulisseau (5), le passage de la tige de commande (8) de la position initiale à la position de lecture s'effectuant par une première poussée et le retour de la position de lecture à la position initiale s'effectuant par une deuxième poussée sur la tige de commande (8) et donc sur le coulisseau (5), la tige de commande (8) étant déviée de manière élastique le long de la came de commande (20) pendant son actionnement, une paroi de chambre (27) étant en outre prévue, **caractérisé en ce que** la came de commande (20) est limitée latéralement par la paroi de chambre (27), laquelle sert en même temps de paroi de guidage pour la tige de commande (8) et le coulisseau (5) qui peut glisser le long de celle-ci.

2. Mécanisme de double poussée (1) selon la revendication 1, **caractérisé en ce que** la tige de commande (8) est déviée de manière élastique à l'écart du coulisseau (5) par le passage de la position initiale jusqu'à la position de lecture.

3. Mécanisme de double poussée (1) selon la revendication 1 ou 2, **caractérisé en ce que** la came de commande (20) est délimitée par des parois de guidage (22, 23).

4. Mécanisme de double poussée (1) selon l'une quelconque des revendications précédentes, **caractérisé en ce que** la paroi de guidage (22) possède un évidement (24) dans lequel la tige de commande (8) peut être encliquetée dans la position de lecture.

5. Mécanisme de double poussée (1) selon l'une quelconque des revendications précédentes, **caractérisé en ce que** la came de commande (20) est limitée par la paroi de guidage (22) de telle sorte que la tige de commande (8) soit guidée le long de la paroi de guidage (22) et en l'occurrence déviée de manière élastique.

6. Mécanisme de double poussée (1) selon l'une quelconque des revendications précédentes, **caractérisé en ce que** la première paroi de guidage (22) sert de paroi de guidage pour la première poussée pour la tige de commande (8) et la paroi de chambre (27) sert de paroi de guidage pour la deuxième poussée pour la tige de commande (8).

7. Mécanisme de double poussée (1) selon l'une quelconque des revendications précédentes, **caractérisé en ce que**, lors de l'insertion, par conséquent lors de la première poussée, du coulisseau (5) dans le lecteur de cartes, la tige de commande (8) est sollicitée au maximum de manière élastique en sens inverse à son sens de déviation lorsqu'elle atteint la position déviée (28).

8. Mécanisme de double poussée (1) selon l'une quelconque des revendications précédentes, **caractérisé en ce que** peu après le dépassement de la position déviée (28) lors de la première poussée, la tige de commande (8) revient élastiquement en sens inverse à son sens de débattement en direction de sa position de non débattement, au moyen d'une insertion supplémentaire du coulisseau (5) dans le sens d'insertion.

9. Mécanisme de double poussée (1) selon l'une quelconque des revendications précédentes, **caractérisé en ce qu'**un ressort (7) qui est en liaison fonctionnelle avec le coulisseau (5) est contraint élastiquement en sens inverse au sens d'insertion lors de la première poussée et tente de ramener le coulisseau à sa position initiale.

10. Mécanisme de double poussée (1) selon l'une quelconque des revendications précédentes, **caractérisé en ce que** dans le cas où la première poussée a été effectuée de manière incomplète, c'est-à-dire avant d'atteindre la position de lecture et avant d'atteindre la position déviée (28), le coulisseau (5) revient à sa position initiale, la tige de commande glissant le long de la paroi de guidage (22) et revenant élastiquement, en sens inverse à sa déviation, à sa position non déviée.

11. Mécanisme de double poussée (1) selon l'une quelconque des revendications précédentes, **caractérisé en ce qu'**après avoir atteint la position déviée (28) jusqu'à la fin de la première poussée, la tige de commande (8) est comprimée dans l'évidement (24) puis est maintenue dans cette position d'encliquetage contre l'évidement (24) après le relâchement du coulisseau (5).

12. Mécanisme de double poussée (1) selon l'une quelconque des revendications précédentes, **caractérisé en ce que** la tige de commande (8) possède une goupille de guidage (15) qui s'enfonce dans l'évidement (24) lorsque la position de lecture est atteinte et le coulisseau est de ce fait maintenu à l'encontre de la force du ressort (7).

13. Mécanisme de double poussée (1) selon l'une quelconque des revendications précédentes, **caractérisé en ce que** le retour de la tige de commande (8) à partir de l'évidement (24) jusqu'à la position initiale est provoqué par une deuxième poussée sur le coulisseau, la tige de commande (8) revenant davantage de manière élastique, en sens inverse à sa déviation élastique, à la position non déviée jusqu'à ce que la tige de commande (8) ait atteint la paroi de chambre (27) et s'applique contre celle-ci.

14. Mécanisme de double poussée (1) selon l'une quelconque des revendications précédentes, **caractérisé en ce qu'**après la deuxième poussée, peu après avoir quitté l'évidement (24), la tige de commande (8) heurte une portion de came de commande (25) s'élevant de manière oblique vers le haut et glisse le long de celle-ci, du fait que le ressort (7) tente de ramener le coulisseau (5) à la position initiale.

15. Mécanisme de double poussée (1) selon l'une quelconque des revendications précédentes, **caractérisé en ce qu'**à l'extrémité de la portion de came de commande (25), la tige de commande (8) se trouve sur une portion de came de commande (29) plane essentiellement triangulaire.

16. Mécanisme de double poussée (1) selon l'une quelconque des revendications précédentes, **caractérisé en ce qu'**un gradin (26) se trouve à l'extrémité de la portion de came de commande (25).

17. Mécanisme de double poussée (1) selon l'une quelconque des revendications précédentes, **caractérisé en ce que** la tige de commande (8) et le coulisseau (5) sont réalisés d'un seul tenant.

18. Mécanisme de double poussée (1) selon l'une quelconque des revendications précédentes, **caractérisé en ce que** le gradin (26) prédéfinit le sens de la tige de commande (8) dans le sens des aiguilles d'une montre par le fait que la tige de commande (8) est déplacée en direction de la paroi de guidage (22) lorsqu'elle heurte le gradin (26).
